(19) Europäisches Patentamt
European Patent Office
Office européen des brevets

(11) **EP 3 097 965 B1**

(12) **EUROPÄISCHE PATENTSCHRIFT**

(45) Veröffentlichungstag und Bekanntmachung des Hinweises auf die Patenterteilung:
**11.12.2019 Patentblatt 2019/50**

(51) Int Cl.:
**B01D 39/08** (2006.01)　　　**B01D 39/12** (2006.01)

(21) Anmeldenummer: **16167965.9**

(22) Anmeldetag: **02.05.2016**

(54) **FILTERGEWEBE IN DER FORM EINER FILTERGEWEBELAGE ZUR LUFTREINIGUNG IN EINER DUNSTABZUGSHAUBE**

FILTER FABRIC IN THE FORM OF A FABRIC FILTER LAYER FOR CLEANING AIR IN A VAPOUR EXTRACTOR

TISSU FILTRANT SOUS FORME DE COUCHE TISSU DE FILTRE DESTINE AU NETTOYAGE DE L'AIR DANS UNE HOTTE ASPIRANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2015 DE 102015006693**

(43) Veröffentlichungstag der Anmeldung:
**30.11.2016 Patentblatt 2016/48**

(73) Patentinhaber: **ADEK Bauteile GmbH**
**40699 Erkrath (DE)**

(72) Erfinder: **KUREK, Michael**
**40699 Erkrath (DE)**

(74) Vertreter: **Fischer & Konnerth**
**Patentanwälte Partnerschaft**
**Schertlinstraße 18**
**81379 München (DE)**

(56) Entgegenhaltungen:
**EP-A1- 0 365 676　　　WO-A1-02/072232**
**DE-A1- 10 106 307　　　DE-A1-102010 063 853**
**US-A- 3 701 433**

**Beschreibung**

Die Erfindung betrifft ein Filtergewebe in der Form einer Filtergewebelage zur Luftreinigung in einer Dunstabzugshaube.

Aus der DE 10 2010 063 853 A1 ist eine Filtereinheit für eine Dunstabzugshaube bekannt geworden, wobei als Filter für die Filtereinheit Streckmetallfilter und/oder Gewebefilter vorgeschlagen werden.

Aufgabe der vorliegenden Erfindung ist es, ein eingangs genanntes Filtergewebe bereitzustellen, das hinsichtlich seiner Gebrauchseigenschaften verbessert ist, sowie ein Filterelement mit einem verbesserten Filtergewebe zu schaffen.

Die Aufgabe wird durch ein Filtergewebe mit den Merkmalen des Anspruchs 1 gelöst.

Vorteilhafte Ausgestaltungen der Erfindung sind in den abhängigen Ansprüchen angegeben.

Es hat sich gezeigt, dass bei dem erfindungsgemäßen Filtergewebe aus Fäden mit einem Fadendurchmesser von etwa 0,04 mm bis etwa 0,08 mm und insbesondere 0,06 mm in Filtern von Küchen-Dunstabzugshauben eine besonders effiziente Reinigungswirkung erzielt wird gegenüber Filtermaterial aus Streckmetall oder Drahtgestrick. Diese verbesserte Reinigungswirkung und Fettabscheidung aus dem Wrasen beruht im Wesentlichen auf der deutlich größeren Oberfläche des aus den Fäden gewebten Filtergewebes. Der Drahtdurchmesser von Drähten bei Drahtgestrick beträgt üblicherweise 0,28 mm und ist damit wesentlich größer als der Durchmesser der Fäden des erfindungsgemäßen Filtergewebes, das - bei gleichem Filtervolumen - die etwa 6fache Filteroberfläche gegenüber Drahtgestrick und eine noch wesentlich größere Oberfläche im Vergleich zu Streckmetall aufweist. An der Fadenoberfläche setzen sich Flüssigkeits- und Fetttröpfchen des zu reinigenden Luftstromes ab, wobei eine gewisse Rauhigkeit der Fadenoberfläche das Anhaften der Flüssigkeits- und Fetttröpfchen begünstigt.

Es ist besonders bevorzugt, dass das Filtergewebe aus Kunststofffäden und insbesondere aus Polyesterfäden gebildet ist. Ein solches Filtergewebe ist bei Verwendung und Anordnung in einem Filterelement oder dergleichen sehr formbeständig, weist ein vergleichsweise geringes Gewicht auf und ist spülmaschinenfest, so dass es durch Waschen, z. B. in einer Spülmaschine, wiederholt regeneriert werden kann. Bei Polyesterfäden bzw. Polyestergewebe treten diese Vorteile aufgrund der Materialeigenschaften in erhöhtem Maße auf, da insbesondere die Grenzflächenspannungen zwischen den Polyesterfäden und den Flüssigkeits- und Fetttröpfchen eine verbesserte Anhaftung dieser Tröpfchen an den Fäden bzw. dem Gewebe ermöglicht.

Gemäß der Erfindung weist die Filtergewebelage pro 1,0 cm³ Filtervolumen zwischen 0,030 cm³ und 0,045 cm³ und insbesondere 0,037 cm³ Filtergewebe auf. Auch wenn der Fadendurchmesser vergleichsweise gering ist, wird somit mehr Fadenmaterial oder Filtergewebe pro Volumeneinheit verarbeitet. Aluminiumgestrick als bekanntes Filtermaterial weist demgegenüber beispielsweise etwa 0,029 cm³ Filtermaterial pro 1,0 cm³ Filtervolumen auf. Der größere Anteil an Filtermaterial bzw. Filtergewebe bietet eine größere Oberfläche zur Luftfilterung und Luftreinigung.

Durch den dünnen Faden ergibt sich somit eine höhere spezifische Oberfläche (Fläche pro Volumen). Für die Vergrößerung der Oberfläche gibt es zwei Gründe: Zum einen ist in dem Gewebe ein größeres Volumen an Filtermaterial pro cm³ Filtervolumen untergebracht. Dadurch erhöht sich auch bei den voranstehend genannten beispielhaften Werten die Oberfläche um den Faktor

$$0,037 \text{ cm}^3 / 0,029 \text{ cm}^3 = 1,28.$$

Zum anderen ist die Oberfläche bei konstantem Volumen umgekehrt proportional zum Fadendurchmesser. Dies ergibt sich aus:

$$\text{Oberfläche } A = \pi * d * l \quad (d = \text{Fadendurchmesser}, l = \text{Fadenlänge})$$

$$\text{Volumen } V = \pi/4 * d^2 * l$$

$$A / V = 4 * 1/d$$

Bei konstantem Fadenvolumen ändert sich also die Oberfläche bei einer Reduzierung des Fadendurchmessers von 0,28 mm auf 0,06 mm um den Faktor 0,28/0,06 = 4,67

Insgesamt ergibt sich aus der Vergrößerung des Fadenvolumens und der Verringerung der Fadendicke eine Oberflä-

chenvergrößerung um den Faktor

$$1,28 * 4,67 = 5,98$$

Beide Effekte ergeben somit die Oberflächenvergrößerung um das etwa Sechsfache.

Zweckmäßigerweise beträgt die Oberfläche des Filtergewebes zwischen 20 cm$^2$ und 30 cm$^2$ und insbesondere 25 cm$^2$ pro 1,0 cm$^3$ Filtervolumen der Gewebefilterlage. Die Oberfläche des gewebten Filters ist damit erheblich größer als die Oberfläche von Metall- oder Drahtgestrickfiltern. Deren Oberfläche beträgt üblicherweise etwa 4 cm$^2$ bis 5 cm$^2$ pro 1,0 cm$^3$ Filtervolumen. Die Filterleistung der Filtergewebelage ist durch diese größere Oberfläche deutlich verbessert.

Bei dem erfindungsgemäßen Polyesterfiltergewebe beträgt das freie Volumen bevorzugt zwischen 95,0 % und 97,0 % und insbesondere 96,3 %. Der Druckverlust beim Durchströmen der zu reinigenden Luft ist aufgrund der sehr dünnen Fäden erheblich niedriger als bei einem Drahtgestrick als Filtermaterial. Der geringe Druckverlust beruht auf einer geringeren Störung und Verwirbelung der zu reinigenden Luftströmung im Filtergewebe im Vergleich mit größerem Druckverlust beim Durchströmen von Streckmetall oder Drahtgestrick. Mit dem erfindungsgemäßen Filtergewebe kann eine Dunstabzugshaube mit geringerem Energieverbrauch betrieben werden.

Insbesondere sind die Fäden bzw. das Filtergewebe ohne Beschichtungsmittel oder filternde oder filterfördernde Mittel hergestellt. Zweckmäßigerweise ist z. B. im Filtergewebe keine Aktivkohle oder dergleichen enthalten.

Die Aufgabe wird auch gelöst durch ein Filterelement zur Luftreinigung in einer Dunstabzugshaube, wobei das Filterelement ein Filtergewebe nach einem der Ansprüche 1 bis 4 aufweist. Vorteilhafte Ausgestaltungen des erfindungsgemäßen Filterelements sind in den abhängigen Ansprüchen angegeben.

Zweckmäßigerweise enthält das Filterelement eine Lage des Filtergewebes, wobei die Lage des Filtergewebes zwischen einer vorderen Decklage und einer hinteren Decklage angeordnet ist. Die vordere Decklage wie auch die hintere Decklage werden von der zu reinigenden Luftströmung gleichfalls durchströmt und können aufgrund ihrer Struktur zur Reinigung und Abscheidung beitragen und geben dem Filtergewebe in der Form der Filtergewebelage eine handhabbare Struktur.

Jede der beiden Decklagen kann sowohl aus grobmaschigem wie auch aus feinmaschigem Filtergewebe hergestellt sein. Durch die wahlweise Anordnung von grobmaschigem oder feinmaschigem Filtergewebe an der Luftzuströmseite und der Luftabströmseite der Filtergewebelage oder des Filterelements kann der Abscheidegrad an der jeweiligen Decklage beeinflusst werden.

Zweckmäßigerweise ist das zwischen den Decklagen gehaltene Filtergewebe bzw. die Filtergewebelage zwischen zwei Streckmetalllagen aufgenommen. Damit ist gewährleistet, dass der Gewebefilter insbesondere bei Reinigungsvorgängen in Spülmaschinen vor Beschädigung geschützt ist. Die Streckmetalllagen können auch zur Luftreinigung durch Abscheiden von Fett- und Öltropfen beitragen.

Das Filtergewebe kann auch ohne Decklagen verwendet werden oder mit nur einer Decklage versehen sein und in dieser Form im Filterelement bzw. zwischen den zwei Streckmetalllagen angeordnet sein. Falls die Stabilität des Filtergewebes bzw. dieser Filtergewebelage als nicht ausreichend angesehen wird, kann eine thermische Behandlung des Filtergewebes zum Versteifen der Fäden und einer daraus folgenden Erhöhung der Stabilität führen.

Die Aufgabe wird auch gelöst durch Verwendung eines Filtergewebes nach einem der Ansprüche 1 bis 4 in einer Dunstabzugshaube.

Nachfolgend wird ein erfindungsgemäßes Filtergewebe in einem Filterelement anhand eines Ausführungsbeispiels unter Bezugnahme auf die Zeichnung näher erläutert. Es zeigt:

Fig. 1    in einer perspektivischen Draufsicht in schematischer geschnittener Darstellung ein Filterelement einer Dunstabzugshaube mit einem Filtergewebe; und

Fig. 2    in einer perspektivischen Draufsicht in schematischer geschnittener Darstellung das mit zwei Decklagen abgedeckte Filtergewebe in einer Vorderansicht (linker Teil) und einer Rückansicht (rechter Teil).

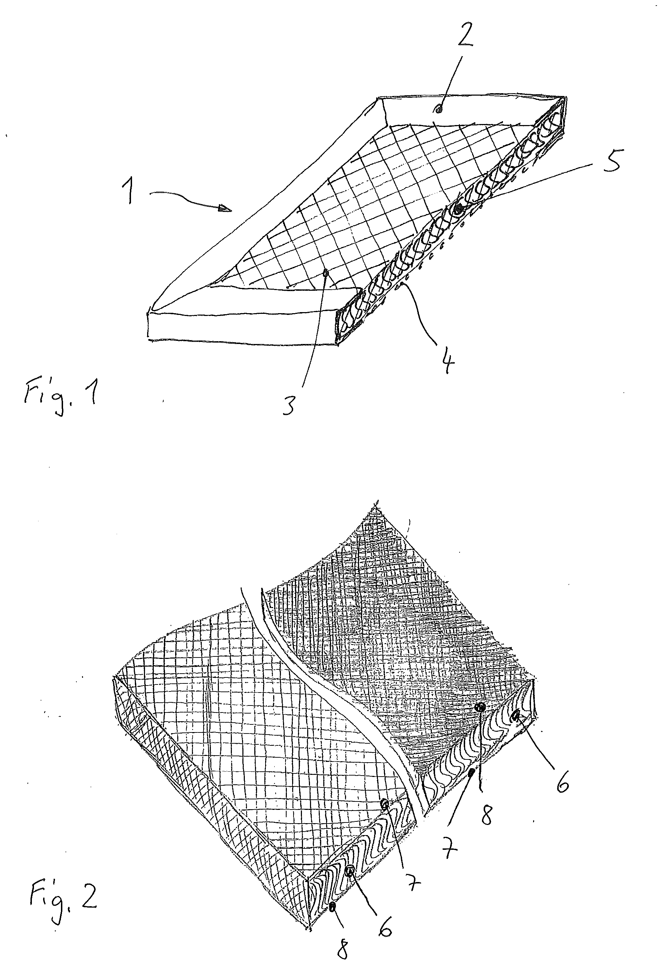

Ein Filterelement 1 (Fig. 1) einer Dunstabzugshaube weist einen beispielsweise rechteckigen Rahmen 2 auf, der z. B. aus Aluminium oder aus einem rostfreien Stahl oder dergleichen hergestellt ist. Der Rahmen 2 umgibt zwei voneinander beabstandete Streckmetalllagen 3 und 4 an deren Rändern und hält diese Streckmetalllagen 3 und 4 zueinander fest. Zwischen den beiden Streckmetalllagen 3 und 4 ist ein Filtergewebe 5 aufgenommen, das als Filtergewebelage 6 oder Gewebefilter von einer vorderen Decklage 7 und einer hinteren Decklage 8 beidseits flächig abgedeckt ist.

Das insbesondere eine Filterkassette darstellende Filterelement 1 ist zum Einsetzen im Bereich einer Ansaugfläche einer Dunstabzugshaube oder Schrägesse vorgesehen.

Das Filtergewebe 5 ist aus Kunststofffäden und insbesondere aus Polyesterfäden gebildet, die einen Durchmesser von etwa von 0,04 mm bis etwa 0,08 mm und insbesondere 0,06 mm aufweisen. Das Filtergewebe 5 ist als Filtergewebelage 6 zwischen den beiden Decklagen 7 und 8 eingebracht, z. B. durch lockeres Stopfen, oder die beiden Decklagen 7 und 8 werden flächig auf die beiden Oberflächen des in die Form einer Filtergewebelage 6 gebrachten Filtergewebes 5 aufgelegt oder sie sind mit dem Filtergewebe 5 bei der Herstellung fest verbunden oder verwebt worden. Die gewünschte Dichte des Filtergewebes 5 und der Filtergewebelage 6 wird durch das Weben bzw. das Anordnen des Filtergewebes 5 als Filtergewebelage 6 geschaffen. Die Filtergewebelage 6 weist insbesondere pro 1,0 cm³ Filtervolumen der Filtergewebelage zwischen 0,030 cm³ und 0,045 cm³ und insbesondere 0,037 cm³ Filtergewebe 5 auf.

Die vordere Decklage 7, die insbesondere auf der Luftzuströmseite des Filterelements 1 angeordnet ist, ist aus dem Polyesterfaden des erfindungsgemäßen Filtergewebes 5 hergestellt und grobmaschig verwebt. Die hintere Decklage 8, die auf der Luftabströmseite des Filterelements 1 angeordnet ist, ist gleichfalls aus dem Polyesterfaden des erfindungsgemäßen Filtergewebes 5 hergestellt, ist jedoch feinmaschig verwebt. Durch die grobporige oder grobmaschige Decklage 7 wird eine geringere Abscheidung von Fett- und Öltropfen auf der Luftzuströmseite erzielt, wohingegen durch die feinporige oder feinmaschige Decklage 8 auf der Luftabströmseite ein höherer Abscheidegrad erzielt wird. Die grobporige oder grobmaschige Decklage 7 wird daher weniger schnell verstopfen, so dass die Aufnahme und Abscheidung in dem Filtergewebe 5 und damit die Luftdurchlässigkeit weniger behindert wird im Vergleich mit einer Filteranordnung, in der auf der Luftzuströmseite auch eine feinporige oder feinmaschige Decklage 8 vorgesehen ist.

Grundsätzlich könnte auch auf zumindest eine der beiden Decklagen verzichtet werden. Die Filterung und Abscheidung wird dann im wesentlichen von dem Filtergewebe 5 und zu geringen Anteilen in den beiden Streckmetalllagen 3 und 4 vorgenommen.

### Bezugszeichenliste

| 1 | Filterelement | 5 | Filtergewebe |
|---|---|---|---|
| 2 | Rahmen | 6 | Filtergewebelage |
| 3 | Streckmetalllage | 7 | vordere Decklage |
| 4 | Streckmetalllage | 8 | hintere Decklage |

## Patentansprüche

1. Filtergewebe (5) in der Form einer Filtergewebelage (6) zur Luftreinigung in einer Dunstabzugshaube mittels Fettabscheidung aus dem Wrasen,
   **dadurch gekennzeichnet,**
   **dass** das Filtergewebe (5) aus Fäden mit einem Fadendurchmesser von 0,04 mm bis 0,08 mm und insbesondere 0,06 mm gebildet ist und die Filtergewebelage (6) pro 1,0 cm³ Filtervolumen der Filtergewebelage (6) zwischen 0,030 cm³ und 0,045 cm³ und insbesondere 0,037 cm³ Filtergewebe (5) aufweist.

2. Filtergewebe (5) nach Anspruch 1, **dadurch gekennzeichnet, dass** das Filtergewebe (5) aus Kunststofffäden und insbesondere aus Polyesterfäden gebildet ist.

3. Filtergewebe (5) nach Anspruch 1 oder 2 **dadurch gekennzeichnet, dass** die Oberfläche des Filtergewebes (5) zwischen 20 cm² und 30 cm² und insbesondere 25 cm² pro 1 cm³ Filtervolumen der Filtergewebelage (6) beträgt.

4. Filtergewebe (5) nach einem der Ansprüche 1 bis 3 **dadurch gekennzeichnet, dass** das freie Volumen des Filter- oder Polyestergewebes zwischen 95,0 % und 97,0 % und insbesondere 96,3 % beträgt.

5. Filterelement (1) zur Luftreinigung in einer Dunstabzugshaube,
   **dadurch gekennzeichnet, dass** es ein Filtergewebe (5) nach einem der Ansprüche 1 bis 4 aufweist.

6. Filterelement nach Anspruch 5, **dadurch gekennzeichnet, dass** die Filtergewebelage (6) zwischen einer vorderen Decklage (7) und einer hinteren Decklage (8) angeordnet ist.

7. Filterelement nach Anspruch 6, **dadurch gekennzeichnet, dass** grobmaschiges oder feinmaschiges Filtergewebe die jeweilige Decklage (7, 8) bildet.

8. Filterelement nach Anspruch 6 oder 7, **dadurch gekennzeichnet, dass** das zwischen den Decklagen (7, 8) gehaltene Filtergewebe (5) zwischen zwei Streckmetalllagen (3, 4) aufgenommen ist.

9. Verwendung eines Filtergewebes nach einem der Ansprüche 1 bis 4 zur Luftreinigung in einer Dunstabzugshaube.

**Claims**

1. Filter fabric (5) in the form of a filter fabric layer (6) for cleaning air in an extractor hood by means of grease separation from the water vapour,
**characterised in that**
the filter fabric (5) is made of threads with a thread diameter of 0.04 mm to 0.08 mm and in particular 0.06 mm and the filter fabric layer (6) has between 0.030 cm$^3$ and 0.045 cm$^3$ and in particular 0.037 cm$^3$ of filter fabric (5) per 1.0 cm$^3$ filter volume of the filter fabric layer (6).

2. Filter fabric (5) according to claim 1,
**characterised in that** the filter fabric (5) is made of synthetic threads and in particular of polyester threads.

3. Filter fabric (5) according to claim 1 or 2,
**characterised in that** the surface of the filter fabric (5) is between 20 cm$^2$ and 30 cm$^2$ and in particular 25 cm$^2$ per 1 cm$^3$ filter volume of the filter fabric layer (6).

4. Filter fabric (5) according to one of claims 1 to 3,
**characterised in that** the free volume of the filter fabric or the polyester fabric is between 95.0% and 97.0% and in particular 96.3%.

5. Filter element (1) for cleaning air in an extractor hood,
**characterised in that** it has a filter fabric (5) according to one of claims 1 to 4.

6. Filter element according to claim 5,
**characterised in that** the filter fabric layer (6)
is arranged between a front outer layer (7) and a back outer layer (8).

7. Filter element according to claim 6,
**characterised in that** the coarse-meshed or fine-meshed filter fabric forms the respective outer layer (7, 8).

8. Filter element according to claim 6 or 7,
**characterised in that** the filter fabric (5) held between the outer layers (7, 8) is gripped between two expanded metal layers (3, 4).

9. Use of a filter fabric according to one of claims 1 to 4 for cleaning air in an extractor hood.

**Revendications**

1. Tissu filtrant (5) sous la forme d'une couche de tissu filtrant (6) pour la purification de l'air dans une hotte aspirante par séparation des graisses présentes dans la vapeur, **caractérisé en ce que** le tissu filtrant (5) est formé de fils ayant un diamètre de fil de 0,04 mm à 0,08 mm et en particulier de 0,06 mm, et la couche de tissu filtrant (6) présente, par 1,0 cm$^3$ de volume de filtration de la couche de tissu filtrant (6), entre 0,030 cm$^3$ et 0,045 cm$^3$ et en particulier 0,037 cm$^3$ de tissu filtrant (5).

2. Tissu filtrant (5) selon la revendication 1, **caractérisé en ce que** le tissu filtrant (5) est formé de fils de matière plastique et en particulier de fils de polyester.

3. Tissu filtrant (5) selon la revendication 1 ou 2, **caractérisé en ce que** la surface du tissu filtrant (5) est comprise entre 20 cm$^2$ et 30 cm$^2$ et en particulier est égale à 25 cm$^2$ par 1 cm$^3$ de volume de filtration de la couche de tissu filtrant (6).

4. Tissu filtrant (5) selon l'une des revendications 1 à 3, **caractérisé en ce que** le volume libre du tissu filtrant ou tissu de polyester est compris entre 95,0 % et 97,0 % et en particulier est égal à 96,3 %.

5. Élément filtrant (1) pour la purification de l'air dans une hotte aspirante, **caractérisé en ce qu'**il présente un tissu filtrant (5) selon l'une des revendications 1 à 4.

6. Élément filtrant selon la revendication 5, **caractérisé en ce que** la couche de tissu filtrant (6) est disposée entre une couche de recouvrement avant (7) et une couche de recouvrement arrière (8).

7. Élément filtrant selon la revendication 6, **caractérisé en ce que** du tissu filtrant à grosses mailles ou à mailles fines forme la couche de recouvrement respective (7, 8).

8. Élément filtrant selon la revendication 6 ou 7, **caractérisé en ce que** le tissu filtrant (5) maintenu entre les couches de recouvrement (7, 8) est logé entre deux couches de métal déployé (3, 4).

9. Utilisation d'un tissu filtrant selon l'une des revendications 1 à 4 pour la purification de l'air dans une hotte aspirante.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010063853 A1